# EUROPEAN PATENT SPECIFICATION

(11) **EP 1 389 289 B1**
(45) Date of publication and mention of the grant of the patent: **10.08.2005**
(21) Application number: 01943780.5
(22) Date of filing: 22.05.2001
(51) Int. Cl.: F24F 11/04, G01F 1/46

(54) **FLOW-MEASURING APPARATUS IN AIR VENTING AND CONDITIONING SYSTEMS**
VORRICHTUNG ZUR STRÖMUNGSMESSUNG IN LÜFTUNGS- UND KLIMAANLAGEN
DEBITMETRE PLACE DANS DES SYSTEMES D'EVACUATION ET DE CONDITIONNEMENT D'AIR

(43) Date of publication of application: 18.02.2004
(73) Proprietor: Edelweiss Italia S.r.l., 24050 Zanica (IT)
(72) Inventor: DE MARTINO, Bernardino, I-24068 Seriate (IT)
(74) Representative: Garavelli, Paolo
(86) International application number: PCT/IT2001/000257
(87) International publication number: WO 2002/095300

(56) References cited:
- EP-A- 0 183 987
- EP-A- 0 431 345
- EP-A- 0 887 627
- DE-A- 3 527 425
- DE-A- 4 125 623
- DE-A- 4 207 043
- US-A- 4 453 419
- US-A- 4 768 386
- US-A- 5 063 962
- US-A- 5 753 825
- FOLSOM R G ET AL: "Review of the Pitot Tube" , TRANSACTIONS OF THE AMERICAN SOCIETY OF MECHANICAL ENGINEERS, ASME. NEW YORK, US, VOL. 17, NR. 78, PAGE(S) 1447-1460 XP002074738
- PATENT ABSTRACTS OF JAPAN vol. 013, no. 054 (P-824), 8 February 1989 (1989-02-08) -& JP 63 246618 A (EUZEFUROO KK), 13 October 1988 (1988-10-13)

## Description

The present invention refers to a flow-measuring apparatus inside a duct within air venting and conditioning systems in environments.

An apparatus for detecting and checking the air flow along a duct substantially comprises measuring means connected to sensors that are able to detect the flow value in a certain duct section, computing means for comparing the measured value with a sample value and actuators comprising the members that are adapted to adjust the environmental conditions depending on the result of said comparison.

Flow modifying effects in a duct induced by turbolence and uncontrolled flow deviations next to duct curves or branches, are known; the induced perturbation is also known that is induced by means such as the gates placed inside the duct to modify flow direction and intensity. In order to solve these inconveniences, flow detecting means are used that are able to locate the different flow conditions, being disturbed or not, and measure a meaningful and above all weighted value of the air flow intensity in a certain duct section.

In other words, the measuring apparata within air venting and conditioning systems must be able to transmit the flow values including the chaotic distribution of fluid threads along a duct length and in a certain section; in particular, they must be able to detect different values of the differential pressure, this meaning a meaningful quantity when flow speed conditions change, avoiding at the same time that a background noise and sound phenomena occur within the speed interval in which the system operates.

The prior art is in particular contained in documents EP-A-0183987 and EP-A-0409779. The apparata disclosed in these patents allow measuring the flow based on the differential pressure value obtained by means of drilled tubular elements in different points of the duct section: - in document EP-A-0183987 the flow control technique is dealt with inside a duct of an air venting and conditioning system by means of measuring apparata connected to rows of blind tubular elements inserted in a star-like way transversally into the duct and respectively equipped with different openings oriented in an opposite direction to the flow and in a contrary or transverse direction to the flow; - in document EP-A-0409779 a flow measuring apparatus is disclosed that communicates, through two, small channels, with an hollow ring-shaped and concentric body equipped with two chambers communicating with the duct volume through different openings that are respectively on the front and transverse side with respect to the flow.

The common feature present in the above-mentioned apparata is the real value of the differential pressure which depends on the weighted contribution of the flow speed detected in the different openings along the tubular elements, being such differential pressure the meaningful quantity in the system controlling conditioning and venting.

Within the above-described known prior art, a problem that often occurs is given by the scarce sensitivity of the measuring systems at low speeds, namely, the difficulty in discriminating the differential pressure values.

Another problem is given by the difficulty in keeping low the sound level emitted by the control system parts that,interact with the air flow at the different operating speeds.

DE-A-3 527 425 discloses an apparatus according to the preamble of Claim 1.

The apparatus of the present invention has been realised in order to improve the response of the differential pressure measuring system at low speeds.

Moreover, the apparatus of the invention has been realised in order to obtain a flow-measuring apparatus that can be easily calibrated by operating on its geometry, thereby optimizing the sound response level without anyway modifying the differential pressure-detecting performance for which the apparatus is designed.

This is a measuring apparatus that communicates, by means of two channels placed in succession along the flow direction, with an open hollow body in a direction that is respectively opposite and transverse with respect to the flow, whose feature is that this hollow body is composed of two elongated walls along the flow direction, being such walls joined by means of a diaphragm placed between these two channels, and that at least the opening along the direction that is opposite to the flow is composed of a continuous slit.

The above and other objects and advantages of the invention, as will appear from the following description, are obtained by a measuring apparatus as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:

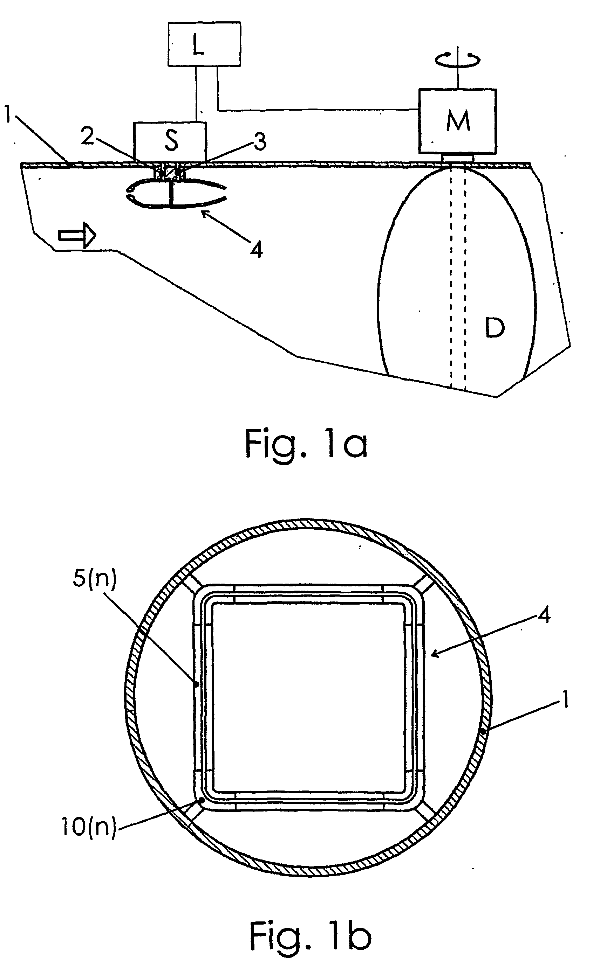

- Figure 1a shows an assembly view of the measuring apparatus in the duct section;
- Figure 1b shows a cross-sectional view of the duct equipped with the hollow body on which the flow impinges;

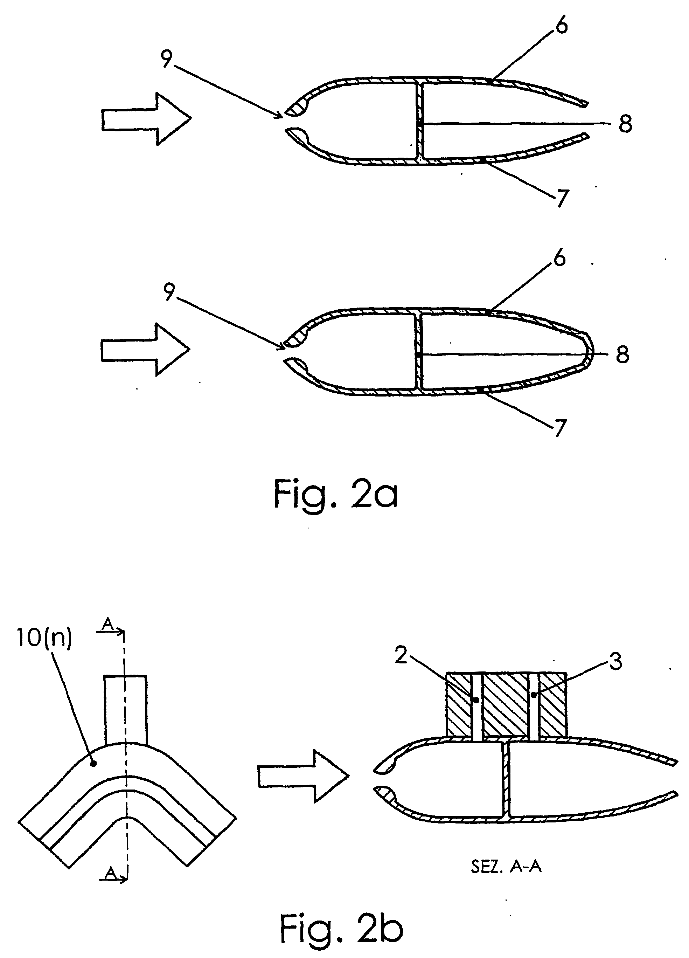

- Figure 2a shows a longitudinal sectional view with respect to the flow direction of the hollow body limited by two walls and a diaphragm;
- Figure 2b shows the curved length of the hollow body composed of the interspace from whose external wall a protrusion containing the two connection channels with the measuring members transversally projects; and
- Figure 3 shows the cross-sectional views of the duct with the different arrangements of the hollow body as function of the sizes of the duct itself.

With reference to the Figures, the flow-measuring apparatus of the invention substantially comprises a sensor S connected inside the duct 1 to an hollow body 4 through two channels 2 and 3 placed in succession along the flow direction.

This sensor S in turn transmits the detected signal to a logic unit L connected to an actuator M that operates on the movement of a gate D or any other flow-adjusting element. This hollow body 4 is composed of a set of modular elements 5(1), 5(2), ..., 5(n), whose longitudinal section is constant and elongated along the flow direction.

These modular elements 5(n) are rectilinear elements with a suitable length according to the design that they must reproduce in the duct cross section. The typical shape of the cross section of these modular elements 5(n) is an interspace formed by two walls 6 and 7 joined by a diaphragm 8 approximately at the height of a semi-chord subtending the two ends of these walls 6, 7. The diaphragm 8 has in its front end, in a direction that is opposite to the flow, a continuous slit 9 that is developed for the whole length of the element 5(n). The opposite end, along the direction that is parallel to the flow, is not necessarily equipped with the same above-described slit, being of the shape that is, according to the prior art, the closed one, suitably drilled, or open.

The modular elements 5(n) are made mutually intercommunicating and univocally connected to the sensor S by means of junction elements 10(n), 11(n), 12(n), depending on the junction of these modular elements 5(n) that is a connection with two channels, three channels, four channels or simply the continuity between two modular rectilinear elements next to the connection with the duct surface.

These junction elements 10(n), 11(n), 12(n), being more or less curvilinear along the transverse duct plane, anyway comply with the continuity of the interspace delimited by the hollow body 4.

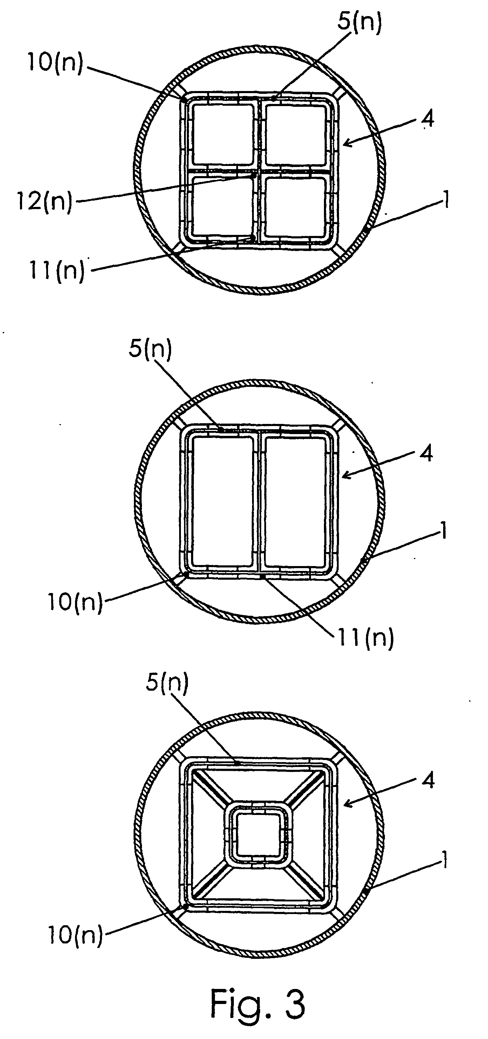

At least one junction element of the type 10(n) is equipped, in addition to the suitable securings to the duct wall, with the channels 2 and 3 realised astride of the diaphragm 8, complying with the intercommunicability condition of the "network" of elements composing the hollow body 4 with respect to the measuring element S. Figure 3 shows, in this respect, different types of arrangements of the modular rectilinear elements 5(n) joined according to different designs by means of the above-described junction elements 10(n), 11(n), 12(n). For example, the non-limiting shapes shown in Fig. 3 are a set of quadrilaterals, each one having at least one side in common with the adjacent quadrilaterals, or a set of concentric quadrilaterals connected along their common diagonals.

In particular, an interspace distribution is obtained along the transverse duct section that is able to define a continuous flow-measuring outline due to the slit 9 that is made a single entity by connecting the rectilinear elements 5(n) with the junction elements 10(n), 11(n), 12(n).

The apparatus of the present invention efficiently reaches the objectives for which it has been realised: in particular, the branched arrangement of the multiple modular and junction elements intercommunicating and connected with the flow-measuring member allows the weighted measure of the pressure as function of the flow speed distribution in the duct section; the realisation of an outline equipped with a continuous slit at the opposite end to the flow direction allows improving the sensitivity in defining the flow characteristics at low speeds; such continuous slit as well can be easily modified in its geometry by operating on the edge thickness along the slit itself depending on the sound response optimisation.

The apparatus of the invention has the further advantage of enabling a quick industrialisation: the linear elements are obtained by extrusion or pressing; the junction elements are obtained by pressing, suitably equipped in their junction points with the modular rectilinead elements with grooves or undercuts in order to guarantee an efficient connection.

## Claims

1. Flow-measuring apparatus in ducts (1) of air venting and conditioning systems, of a type comprising a sensor (S) communicating by means of two channels (2, 3) placed in a succession along a flow direction with an hollow body (4) that is open along an opposite and transverse direction with respect to the flow, said hollow body (4) comprising two elongated walls (6, 7) along the flow direction and a diaphragm (8) subtended between said two walls (6, 7), thereby forming an interspace having at least one.opening (9) that is similar to a continous slit, **characterised in that** said hollow body (4) is realised by joining different elements (5(n)) intercommunicating by means of junction elements (10(n), 11(n), 12(n)), a transverse section of said elements (5(n)) having the same geometric shape as the transverse section of said junction elements (10(n), 11(n), 12(n)).

2. Flow-measuring apparatus in air venting and conditioning systems according to Claim 1, **characterised in that** said elements (5(n)) are of a rectilinear shape.

3. Flow-measuring apparatus in air venting and conditioning systems according to Claim 1, **characterised in that** said elements (5(n)) are of a circular shape.

4. Flow-measuring apparatus in air venting and conditioning systems according to Claim 1, **characterised in that** at least one junction element (10(n), 11(n), 12(n)) is integral with a wall of the duct (1) where said apparatus lies.

5. Flow-measuring apparatus in air venting and conditioning systems according to Claim 1, **characterised in that** a section of interspace delimited by walls of a junction element (10(n), 11(n), 12(n)) communicates with the flow-measuring apparatus through two channels (2, 3) arranged astride of the diaphragm (8) joining the two walls (6, 7).

6. Flow-measuring apparatus in air venting and conditioning systems according to Claim 1, **characterised in that** said hollow body (4) is developed along a cross section of the duct (1) realising a geometric shape that is approximately shaped as a quadrilateral.

7. Flow-measuring apparatus in air venting and conditioning systems according to Claim 1, **characterised in that** said hollow body (4) is developed along a cross section of the duct (1) realising a geometric shape that is shaped as a set of quadrilaterals, each one having at least one side in common with the adjacent quadrilaterals.

8. Flow-measuring apparatus in air venting and conditioning systems according to Claim 1, **characterised in that** said hollow body (4) is developed along a cross section of the duct (1) realising a geometric shape that is shaped as a set of concentric quadrilaterals connected along their common diagonals.

9. Flow-measuring apparatus in air venting and conditioning systems according to Claim 1, **characterised in that** the rectilinear elements (5(n)) are obtained by extrusion or by pressing.

10. Flow-measuring apparatus in air venting and conditioning systems according to Claim 1, **characterised in that** the junction elements (10(n), 11(n), 12(n)) are obtained by pressing.

11. Flow-measuring apparatus in air venting and conditioning systems according to Claim 1, **characterised in that** an edge of each one of the two walls (6, 7) extended similar to a continuous slit is suitably calibrated in its thickness depending on a sound response optimisation of the apparatus onto which the flow impinges.

## Patentansprüche

1. Luftstrommessgerät in Leitungen (1) von Belüftungs- und Klimaanlagen mit einem Sensor (S), der durch zwei Kanäle (2, 3), die nacheinander entlang einer Luftstromrichtung angeordnet sind, mit einem Hohlkörper (4) kommuniziert, der in entgegen gesetzter und transversaler Richtung gegenüber des Luftstroms geöffnet ist. Dieser Hohlkörper (4) enthält zwei verlängerte Wände (6, 7) entlang der Richtung des Luftstroms und eine Blende (8), die zwischen den beiden Wänden (6, 7) unterspannt ist, und bildet auf diese Weise einen Zwischenraum mit mindestens einer Öffnung (9), die einem kontinuierlichen Schlitz ähnelt. Der genannte Hohlkörper (4) ist so realisiert, dass er verschiedene Elemente (5(n)) vereint, die durch Verbindungselemente (10(n), 11(n), 12(n)) miteinander kommunizieren. Der Querschnitt dieser Elemente (5(n)) hat dieselbe geometrische Form wie der Querschnitt der genannten Verbindungselemente (10(n), 11(n), 12(n)).

2. Luftstrommessgerät in Belüftungs- und Klimaanlagen gemäß Patentanspruch 1, das **dadurch gekennzeichnet ist, dass** die genannten Elemente (5(n)) eine geradlinige Form haben.

3. Luftstrommessgerät in Belüftungs- und Klimaanlagen gemäß Patentanspruch 1, das **dadurch gekennzeichnet ist, dass** die genannten Elemente (5(n)) eine runde Form haben.

4. Luftstrommessgerät in Belüftungs- und Klimaanlagen gemäß Patentanspruch 1, das **dadurch gekennzeichnet ist, dass** mindestens ein Verbindungselement (10(n), 11(n), 12(n)) ein Teil mit einer Wand der Leitung (1), wo sich das genannte Gerät befindet, ein Stück bildet.

5. Luftstrommessgerät in Belüftungs- und Klimaanlagen gemäß Patentanspruch 1, das **dadurch gekennzeichnet ist, dass** ein Abschnitt des Zwischenraums, der von den Wänden eines Verbindungselements (10(n), 11(n), 12(n)) umgrenzt ist, mit dem Luftstrommessgerät durch zwei Kanäle (2,3) kommuniziert, die auf der Blende (8) angebracht sind, die die beiden Wände (6,7) vereint.

6. Luftstrommessgerät in Belüftungs- und Klimaanlagen gemäß Patentanspruch 1, das **dadurch gekennzeichnet ist, dass** der genannte Hohlkörper (4) sich im Querschnitt der Leitung (1) entwickelt und eine geometrische Figur realisiert, die etwa die Form eines Vierecks hat.

7. Luftstrommessgerät in Belüftungs- und Klimaanlagen gemäß Patentanspruch 1, das **dadurch gekennzeichnet ist, dass** der genannte Hohlkörper (4) sich im Querschnitt der Leitung (1) entwickelt und eine geometrische Figur in Form einer Gruppe von Vierecken realisiert, von denen jedes mindestens eine Seite mit den daneben liegenden Vierecken gemeinsam hat.

8. Luftstrommessgerät in Belüftungs- und Klimaanlagen gemäß Patentanspruch 1, das **dadurch gekennzeichnet ist, dass** der genannte Hohlkörper (4) sich im Querschnitt der Leitung (1) entwickelt und eine geometrische Figur in Form einer Gruppe von konzentrischen Vierecken realisiert, die entlang der gemeinsamen Diagonalen miteinander verbunden sind.

9. Luftstrommessgerät in Belüftungs- und Klimaanlagen gemäß Patentanspruch 1, das **dadurch gekennzeichnet ist, dass** die geradlinigen Elemente (5(n)) durch Fließpressen und Formstanzen erhalten werden.

10. Luftstrommessgerät in Belüftungs- und Klimaanlagen gemäß Patentanspruch 1, das **dadurch gekennzeichnet ist, dass** die Verbindungselemente (10(n), 11(n), 12(n)) durch Formstanzen erhalten werden.

11. Luftstrommessgerät in Belüftungs- und Klimaanlagen gemäß Patentanspruch 1, das **dadurch gekennzeichnet ist, dass** der Rand von jeder der beiden Wände (6, 7) ähnliche Vorsprünge wie einen kontinuierlichen Schlitz hat, der entsprechend kalibriert ist, je nach Optimierung der Klangantwort des vom Luftstrom umgebenen Geräts.

## Revendications

1. Appareil de mesure du flux dans les conduites (1) de systèmes de ventilation et de climatisation de l'air, d'un type comprenant un capteur (S) communiquant au moyen de deux canaux (2, 3) placés à la suite le long d'un sens du flux avec un corps creux (4) ouvert dans le sens contraire et transversal par rapport au flux, ledit corps creux, (4) comprenant deux parois allongées (6, 7) le long du sens du flux et un diaphragme (8) sous-tendu entre lesdites deux parois (6, 7), pour former ainsi un espace vide ayant au moins une ouverture (9) similaire à une fissure continue, **caractérisé en ce que** ledit corps creux (4) est réalisé en unissant divers éléments (5(n)) inter-communicants par le biais d'éléments de jonction (10(n), 11(n), 12(n)), la section transversale desdits éléments (5(n)) ayant la même forme géométrique que la section transversale desdits éléments de jonction (10(n), 11(n), 12(n)).

2. Appareil de mesure du flux dans les systèmes de ventilation et de climatisation de l'air suivant la revendication 1, **caractérisé en ce que** lesdits éléments (5(n)) sont de forme rectiligne

3. Appareil de mesure du flux dans les systèmes de ventilation et de climatisation de l'air suivant la revendication 1, **caractérisé en ce que** lesdits éléments (5(n)) sont de forme circulaire.

4. Appareil de mesure du flux dans les systèmes de ventilation et de climatisation de l'air suivant la revendication 1, **caractérisé en ce que** au moins un élément de jonction (10(n), 11(n), 12(n)) est solidaire à une paroi de la conduite (1) où se trouve ledit appareil.

5. Appareil de mesure du flux dans les systèmes de ventilation et de climatisation de l'air suivant la revendication 1, **caractérisé en ce qu'**une portion d'espace vide délimitée par les parois d'un élément de jonction (10(n), 11(n), 12(n)) est communicante avec un appareil de mesure du flux à travers deux canaux (2, 3) placés à cheval du diaphragme (8) d'union des deux parois (6, 7).

6. Appareil de mesure du flux dans les systèmes de ventilation et de climatisation de l'air suivant la revendication 1, **caractérisé en ce que** ledit corps creux (4) se développe dans la section transversale de la conduite (1) en réalisant une figure géométrique conformée un peu comme un quadrilatère.

7. Appareil de mesure du flux dans les systèmes de ventilation et de climatisation de l'air suivant la revendication 1, **caractérisé en ce que** ledit corps creux (4) se développe dans la section transversale de la conduite (1) en réalisant une figure géométrique en forme d'un ensemble de quadrilatères, chacun ayant au moins un côté en commun avec les quadrilatères adjacents.

8. Appareil de mesure du flux dans les systèmes de ventilation et de climatisation de l'air suivant la revendication 1, **caractérisé en ce que** ledit corps creux (4) se développe dans la section transversale de la conduite (1) en réalisant une figure géométrique en forme d'un ensemble de quadrilatères concentriques reliés le long de leurs diagonales communes.

9. Appareil de mesure du flux dans les systèmes de ventilation et de climatisation de l'air suivant la revendication 1, **caractérisé en ce que** lesdits éléments rectilignes (5(n)) sont obtenus par extrusion ou par moulage.

10. Appareil de mesure du flux dans les systèmes de ventilation et de climatisation de l'air suivant la revendication 1, **caractérisé en ce que** lesdits éléments de jonction (10(n), 11(n), 12(n)) sont obtenus par moulage.

11. Appareil de mesure du flux dans les systèmes de ventilation et de climatisation de l'air suivant la revendication 1, **caractérisé en ce que** le bord de chacune des deux parois (6, 7) projetées en avant similaires à une fissure continue, est opportunément calibré dans l'épaisseur en fonction de l'optimisation de la réponse sonore de l'appareil investi par le flux.
